# EUROPEAN PATENT APPLICATION

(11) **EP 4 410 616 A1**
(43) Date of publication of application: **07.08.2024**
(21) Application number: 21961986.3
(22) Date of filing: 31.10.2021
(51) Int. Cl.: B60T 13/74

(54) **BRAKING SYSTEM, VEHICLE, AND METHOD FOR CONTROLLING BRAKING SYSTEM**

(71) Applicant: Huawei Technologies Co., Ltd., Shenzhen, Guangdong 518129 (CN)
(72) Inventor: LING, Mingze, Shenzhen, Guangdong 518129 (CN); MA, Wentao, Shenzhen, Guangdong 518129 (CN); ZHU, Feibai, Shenzhen, Guangdong 518129 (CN); ZHOU, Yongyou, Shenzhen, Guangdong 518129 (CN)
(74) Representative: Thun, Clemens
(86) International application number: PCT/CN2021/127788
(87) International publication number: WO 2023/070635

(57) **Abstract**

This application discloses a braking system, a vehicle, and a braking system control method, to simplify a structure of the braking system and improve NVH performance of the vehicle. The braking system includes a brake cylinder, a braking apparatus, a parking apparatus, and a control unit. The brake cylinder includes a piston, a first end of the piston is located in the brake cylinder, and a second end of the piston extends out of the brake cylinder. The braking apparatus is connected to the brake cylinder to drive the piston to move. The parking apparatus includes a motor and a transmission assembly, the motor is directly connected to the transmission assembly, and the transmission assembly is at least partially located in the brake cylinder. The motor is configured to drive the transmission assembly to move in the brake cylinder, to enable the transmission assembly to be in contact with or separate from the first end of the piston.

## Description

### TECHNICAL FIELD

This application relates to the field of vehicle technologies, and in particular, to a braking system, a vehicle, and a braking system control method.

### BACKGROUND

When a vehicle is stopped, parking braking is usually performed to avoid slipping. In a manner of parking braking, a handbrake and an electric parking brake (electrical park brake, EPB) are usually included. A conventional handbrake is of a cable-pulling type, and a user may transfer parking force to a parking apparatus by pulling a handbrake lever. A degree of pulling up the handbrake lever determines an amount of the parking force. Compared with that of the conventional handbrake, an operation mode of the electric parking brake is changed to pressing a button switch. A command is sent to a control unit of an electric parking brake apparatus by pressing or lifting the button. The control unit controls a brake caliper to apply parking force to a brake disc to implement parking braking.

Some electric parking brake apparatuses are usually provided with a deceleration mechanism. When parking braking is performed, power output by a motor needs to be transmitted to the brake caliper after deceleration and torque increase are performed on the power by the deceleration mechanism, so that the brake caliper clamps the brake disc. Similarly, when the parking braking is released, power output by the motor through reverse rotation is also transmitted to the brake caliper through the deceleration mechanism, so that the brake caliper releases the brake disc. Because of the deceleration mechanism, a structure of the electric parking brake apparatus is complex, a size of the electric parking brake apparatus is large, and noise is obvious in a process of parking or releasing the parking. This affects noise, vibration, and harshness (noise, vibration, and harshness, NVH) performance of the vehicle.

### SUMMARY

This application provides a braking system, a vehicle, and a braking system control method, to simplify a structure of the braking system and improve NVH performance of the vehicle on a premise of implementing reliable parking.

According to a first aspect, this application provides a braking system. The braking system may include a brake cylinder, a braking apparatus, and a parking apparatus. The brake cylinder may include a piston, the piston is movably disposed in a cylinder body, a first end of the piston may be located in the brake cylinder, and a second end of the piston may extend out of the brake cylinder. The braking apparatus is connected to the brake cylinder, and the braking apparatus may drive the piston to move. The parking apparatus may include a motor and a transmission assembly, an output shaft of the motor may be directly connected to the transmission assembly, and the transmission assembly is at least partially disposed in the brake cylinder. The motor may be configured to drive the transmission assembly to move in the brake cylinder, to enable the transmission assembly to be in contact with or separate from the first end of the piston.

In the foregoing solution, assistance is provided by the braking apparatus when the braking system is used to perform parking, so that torque output by the motor of the parking apparatus is small, and power required from the motor is also small. In this case, costs of the motor can be reduced. In addition, a deceleration mechanism for increasing torque can be omitted from the parking apparatus. This can simplify a structure of the parking apparatus, and improve overall NVH performance of a vehicle.

For example, the transmission assembly may include a screw and a nut, the output shaft of the motor may be directly connected to the screw, the screw may extend into the brake cylinder, the nut is located in the brake cylinder, and the nut and the screw are in threaded connection. In this way, when the motor drives the screw to rotate, the screw can drive the nut to move, so that the nut can be in contact with or separate from the first end of the piston.

During specific disposition, an axial direction of the screw may be consistent with a length direction of the cylinder body, so that a moving direction of the nut in the cylinder body is also consistent with a moving direction of the piston. In this way, when the nut abuts against the first end of the piston, a direction of force applied by the nut to the piston is in consistent with the moving direction of the piston. This can reduce a risk of piston jamming.

In addition, the first end of the nut may be provided with an opening, an end part of the screw may extend into the opening, the nut is mounted at the end part of the screw, and therefore the nut is also located in the opening. When the motor drives the screw to rotate to drive the nut to move, the nut may abut against the bottom of the opening, to apply force to the piston in a direction away from the motor.

In some possible implementations, the braking system may further include a brake caliper and a brake disc. The brake caliper is connected to the second end of the piston, and the brake disc may be disposed in clamping space of the brake caliper, so that when the piston moves, the brake caliper can be driven to clamp or loosen the brake disc.

In some possible implementations, the brake caliper may include two friction blocks that are disposed oppositely. The two friction blocks may be respectively disposed on two sides of the brake disc, the two friction blocks are in transmission connection, and may move toward or against each other when external force is applied. This changes a size of the clamping space of the brake caliper.

In some possible implementations, the braking system may further include a control unit, and the control unit may be configured to: obtain a parking signal, and control, based on the parking signal, the braking apparatus to drive the piston to move; and when the piston moves to a first position, control the motor to drive the transmission assembly to move to a position abutting against the first end of the piston.

In some possible implementations, the control unit may be further configured to: obtain hydraulic pressure inside the brake cylinder, and when the hydraulic pressure inside the brake cylinder is not less than target hydraulic pressure, control the second end of the piston to move to the first position. It may be understood that the first position is a position at which the second end of the piston is located when the brake caliper clamps the brake disc so that the brake disc stops rotating.

In some possible implementations, the braking apparatus may include a first hydraulic apparatus and a second hydraulic apparatus, and the first hydraulic apparatus and the second hydraulic apparatus may be separately connected to the brake cylinder. The control unit is further configured to: when the first hydraulic apparatus is faulty, control the second hydraulic apparatus to drive the piston to move; or when the second hydraulic apparatus is faulty, control the first hydraulic apparatus to drive the piston to move; or when neither the first hydraulic apparatus nor the second hydraulic apparatus is faulty, control the first hydraulic apparatus and the second hydraulic apparatus to jointly drive the piston to move. In other words, the first hydraulic apparatus and the second hydraulic apparatus may work together or work in redundancy mode. In this way, even if one of the hydraulic apparatuses is faulty, normal operation of the entire braking apparatus can be ensured, thereby improving reliability of the braking apparatus.

In some possible implementations, the control unit may be further configured to: obtain a running status of the vehicle, determine a parking mode of the vehicle based on the running status of the vehicle, and determine the target hydraulic pressure based on the parking mode. The target hydraulic pressure may be determined more accurately based on the running status of the vehicle and by using this design, so that the vehicle can perform reliable parking braking.

When determining the parking mode of the vehicle, the control unit may be further configured to: when the vehicle does not have an external request and the running status of the vehicle meets a parking condition, determine a first parking mode, and determine first parking force based on a vehicle parameter, where the first parking force is the target hydraulic pressure; or when the vehicle has an external request and the running status of the vehicle does not meet a parking condition, determine a second parking mode, and determine second parking force based on the external request, where the second parking force is the target hydraulic pressure; or when the vehicle has an external request and the running condition of the vehicle meets a parking condition, determine a third parking mode, and determine first parking force as the target hydraulic pressure, or determine a larger value in the first parking force and second parking force as the target hydraulic pressure.

The external request of the vehicle includes but is not limited to that the vehicle is in an intelligent driving mode, the vehicle is in an anti-lock braking mode, the vehicle is in a driving assistance mode, or the like. The vehicle parameter includes one or more of a slope of a road on which the vehicle is located, mass of the vehicle, whether the vehicle is provided with a trailer, or a temperature of the brake disc.

When determining whether the running status of the vehicle meets the parking condition, the control unit may be further configured to: when the vehicle receives a parking instruction, determine, based on facts that a vehicle speed of the vehicle is less than or equal to a parking speed threshold, a wheel speed of the vehicle is less than or equal to a parking wheel speed threshold, and a throttle pedal opening degree of the vehicle is less than or equal to an opening degree threshold, that the running status of the vehicle meets the parking condition.

In some possible implementations, the control unit may be further configured to: when the vehicle is in a slipping state, control the braking apparatus to drive the piston to move, to restore the vehicle from the slipping state to a stationary state; and when the second end of the piston moves to a second position, control the motor to drive the screw to rotate, and the screw drives the nut to move to a position abutting against the first end of the piston, to fasten a position of the piston and implement re-parking braking of the vehicle. It may be understood that the second position is located on a side that is of the first position and that is away from the first end of the piston.

According to a second aspect, this application provides a braking system control method. The braking system may include a brake cylinder, a braking apparatus, and a parking apparatus. The brake cylinder may include a piston, the piston is movably disposed in a cylinder body, a first end of the piston may be located in the brake cylinder, and a second end of the piston may extend out of the brake cylinder. The braking apparatus is connected to the brake cylinder, and the braking apparatus may drive the piston to move. The parking apparatus may include a motor and a transmission assembly, an output shaft of the motor may be directly connected to the transmission assembly, and the transmission assembly is at least partially disposed in the brake cylinder. The motor may be configured to drive the transmission assembly to move in the brake cylinder, to enable the transmission assembly to be in contact with or separate from the first end of the piston. The control method may include:
obtaining a parking signal;
controlling, based on the parking signal, the braking apparatus to drive the piston to move; and
when a second end of the piston moves to a first position, controlling the motor to drive the transmission assembly to move to a position abutting against the first end of the piston.

According to the braking system control method provided in this embodiment of this application, assistance is provided by the braking apparatus when parking is performed, so that torque output by the motor of the parking apparatus is small, and power required from the motor is also small. In this case, costs of the motor can be reduced. In addition, a deceleration mechanism for increasing torque can be omitted from the parking apparatus. This can simplify a structure of the parking apparatus, and improve overall NVH performance of the vehicle.

In some possible implementations, the control method may further include: obtaining hydraulic pressure inside the brake cylinder, and when the hydraulic pressure inside the brake cylinder is not less than target hydraulic pressure, controlling the second end of the piston to move to the first position. It may be understood that the first position is a position at which the second end of the piston is located when the brake caliper clamps the brake disc so that the brake disc stops rotating.

In some possible implementations, the braking apparatus may include a first hydraulic apparatus and a second hydraulic apparatus, and the first hydraulic apparatus and the second hydraulic apparatus may be separately connected to the brake cylinder. The controlling the braking apparatus to drive the piston to move may specifically include:
when the first hydraulic apparatus is faulty, controlling the second hydraulic apparatus to drive the piston to move; or when the second hydraulic apparatus is faulty, controlling the first hydraulic apparatus to drive the piston to move; or when neither the first hydraulic apparatus nor the second hydraulic apparatus is faulty, controlling the first hydraulic apparatus and the second hydraulic apparatus to jointly drive the piston to move. In other words, the first hydraulic apparatus and the second hydraulic apparatus may work together or work in redundancy mode. In this way, even if one of the hydraulic apparatuses is faulty, normal operation of the entire braking apparatus can be ensured, thereby improving reliability of the braking apparatus.

In some possible implementations, the control method may further include:
obtaining a running status of a vehicle, determining a parking mode of the vehicle based on the running status of the vehicle, and determining the target hydraulic pressure based on the parking mode. The target hydraulic pressure may be determined more accurately based on the running status of the vehicle and by using this design, so that the vehicle can perform reliable parking braking.

The determining a parking mode of the vehicle based on the running status of the vehicle, and determining the target hydraulic pressure based on the parking mode may specifically include:
when the vehicle does not have an external request and the running status of the vehicle meets a parking condition, determining a first parking mode, and determining first parking force based on a vehicle parameter, where the first parking force is the target hydraulic pressure; or
when the vehicle has an external request, and the running status of the vehicle does not meet a parking condition, determining a second parking mode, and determining second parking force based on the external request, where the second parking force is the target hydraulic pressure; or
when the vehicle has an external request and the running condition of the vehicle meets a parking condition, determining a third parking mode, and determining first parking force as the target hydraulic pressure, or determining a larger value in the first parking force and second parking force as the target hydraulic pressure.

In some possible implementations, the control method may further include:
when the vehicle receives a parking instruction, determining, based on facts that a vehicle speed of the vehicle is less than or equal to a parking speed threshold, a wheel speed of the vehicle is less than or equal to a parking wheel speed threshold, and a throttle pedal opening degree of the vehicle is less than or equal to an opening degree threshold, that the running status of the vehicle meets the parking condition.

In some possible implementations, the control method may further include:
when the vehicle is in a slipping state, controlling the braking apparatus to drive the piston to move, to restore the vehicle from the slipping state to a stationary state; and
when the second end of the piston moves to a second position, controlling the motor to drive the transmission assembly to move to a position abutting against the first end of the piston, to fasten a position of the piston and implement re-parking braking of the vehicle. The second position is located on a side that is of the first position and that is away from the first end of the piston.

According to a third aspect, this application further provides a computing device. The computing device includes a processor, configured to implement the method described in the second aspect. The computing device may further include a memory, configured to store program instructions and data. The memory is coupled to the processor. When executing the program instructions stored in the memory, the processor can implement the method described in the second aspect. The communication apparatus may further include a communication interface. The communication interface is used by the apparatus to communicate with another device. For example, the communication interface may be a transceiver, a circuit, a bus, a module, or another type of communication interface.

According to a fourth aspect, an embodiment of this application further provides a computer-readable storage medium, where the computer-readable storage medium stores a computer program or instructions. When the computer program or the instructions are run on a computer, the computer is enabled to implement the method according to the second aspect.

According to a fifth aspect, an embodiment of this application further provides a computer program. When the computer program is run on a computer, the computer is enabled to perform the method according to the second aspect.

According to a sixth aspect, this application further provides a braking system control apparatus, where the braking system control apparatus may include an obtaining unit and a processing unit.

The obtaining unit is configured to obtain a parking signal.

The processing unit is configured to: control, based on the parking signal, a braking apparatus to drive a piston of a brake cylinder to move, where the piston has a first end located in the brake cylinder and a second end extending out of the brake cylinder; and when the second end of the piston moves to a first position, control a motor of a parking apparatus to drive a transmission assembly to move to a position abutting against the first end of the piston, where the transmission assembly is at least partially located in the brake cylinder.

In some possible implementations, the processing unit may be further configured to:
obtain hydraulic pressure inside the brake cylinder; and when the hydraulic pressure inside the brake cylinder is greater than or equal to target hydraulic pressure, determine that the second end of the piston moves to the first position.

In some possible implementations, the processing unit may be specifically configured to:
when a first hydraulic apparatus is faulty, control a second hydraulic apparatus to drive the piston to move; or when a second hydraulic apparatus is faulty, control a first hydraulic apparatus to drive the piston to move; or when neither a first hydraulic apparatus nor a second hydraulic apparatus is faulty, control the first hydraulic apparatus and the second hydraulic apparatus to jointly drive the piston to move.

In some possible implementations, the obtaining unit may be further configured to obtain a running status of the vehicle.

The processing unit may be further configured to: determine a parking mode of the vehicle based on the running status of the vehicle, and determine the target hydraulic pressure based on the parking mode.

In some possible implementations, the processing unit may be further configured to:
when the vehicle does not have an external request and the running status of the vehicle meets a parking condition, determine a first parking mode, and determine first parking force based on a vehicle parameter, where the first parking force is the target hydraulic pressure; or
when the vehicle has an external request, and the running status of the vehicle does not meet a parking condition, determine a second parking mode, and determine second parking force based on the external request, where the second parking force is the target hydraulic pressure; or
when the vehicle has an external request and the running condition of the vehicle meets a parking condition, determine a third parking mode, and determine first parking force as the target hydraulic pressure, or determine a larger value in the first parking force and second parking force as the target hydraulic pressure.

In some possible implementations, the processing unit may be further configured to:
when the vehicle receives a parking instruction, determine, based on facts that a vehicle speed of the vehicle is less than or equal to a parking speed threshold, a wheel speed of the vehicle is less than or equal to a parking wheel speed threshold, and a throttle pedal opening degree of the vehicle is less than or equal to an opening degree threshold, that the running status of the vehicle meets the parking condition.

In some possible implementations, the processing unit may be further configured to:
when the vehicle is in a slipping state, control the braking apparatus to drive the piston to move; and
when the second end of the piston moves to the first position, control the transmission assembly to move to a position abutting against the first end of the piston, where
the second position is located on a side that is of the first position and that is away from the first end of the piston.

According to a seventh aspect, this application further provides a vehicle. The vehicle may include wheels and the braking system in any one of the foregoing possible technical solutions. The braking system is in transmission connection to the wheels, to apply braking force to the wheels, so that the vehicle implements parking braking or braking release. A structure of the braking system of the vehicle is simple, and NVH performance of the vehicle is improved.

### BRIEF DESCRIPTION OF DRAWINGS

FIG. 1 is a schematic diagram of a structure of a vehicle according to an embodiment of this application;
FIG. 2 is a schematic diagram of a partial structure of a braking system according to an embodiment of this application;
FIG. 3 is a schematic diagram of a structure of a braking apparatus according to an embodiment of this application;
FIG. 4 is a schematic diagram of working conditions of a braking system according to an embodiment of this application;
FIG. 5 is a flowchart of a braking system control method according to an embodiment of this application;
FIG. 6 is a specific flowchart of step 101 shown in FIG. 5;
FIG. 7 is a specific flowchart of step 102 shown in FIG. 5;
FIG. 8 is a specific flowchart of step 103 shown in FIG. 5; and
FIG. 9 is a schematic diagram of a structure of a braking system control apparatus according to an embodiment of this application.

### Reference numerals:

1: Vehicle; 100: Power assembly system; 200: Braking system; 300: Wheel; 10: Brake; 11: Brake cylinder;
12: Brake caliper; 111: Cylinder body; 112: Piston; 1121: First end of the piston; 1122: Second end of the piston;
1111: Sealed cavity; 121: Clamping space; 122: Friction block; 21: Motor; 22: Screw; 23: Nut; 1123: Opening;
31: First hydraulic apparatus; 32: Second hydraulic apparatus; 311: First controller; 312: Master cylinder;
313: Pedal feel simulator; 314: Oil tank; 315: Travel sensor; 321: Second controller; 322: Three-phase motor;
323: Electric cylinder; 324: Motor position sensor; 40: Brake pedal; 1100: Computing device; 1110: Processor;
1120: Memory; 1130: Communication interface; 1140: Bus.

### DESCRIPTION OF EMBODIMENTS

To make the objectives, technical solutions, and advantages of this application clearer, the following further describes this application in detail with reference to the accompanying drawings. Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but is not limited to", unless otherwise specifically emphasized. In addition, words such as "first" and "second" in this specification are merely used for distinguishing description, and shall not be understood as an indication or implication of relative importance or an indication or implication of an order.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

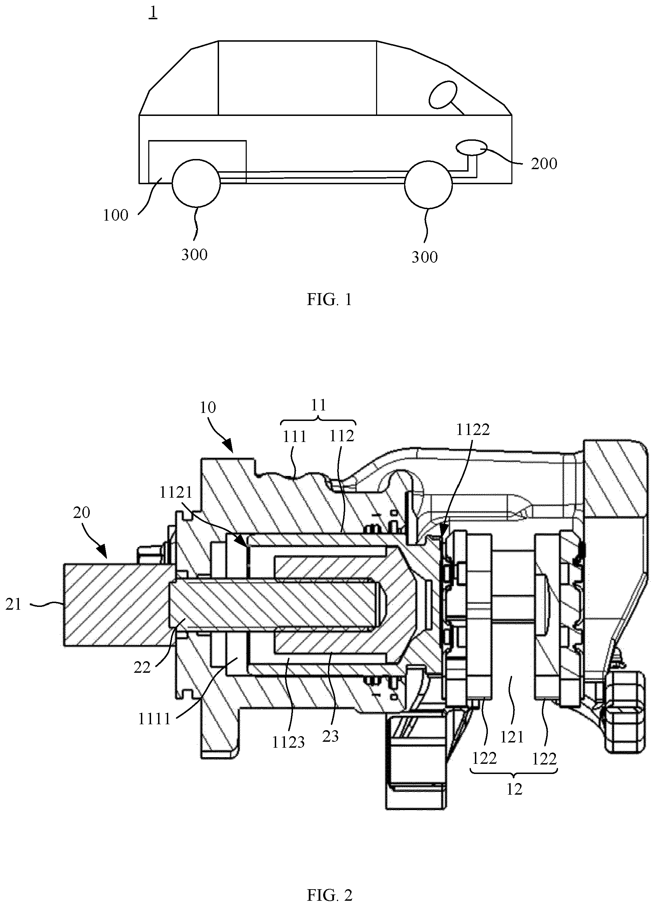

FIG. 1 is a schematic diagram of a structure of a vehicle according to an embodiment of this application. Refer to FIG. 1. A vehicle 1 may include a power assembly system 100, a braking system 200, and wheels 300. The power assembly system 100 may be in transmission connection to the wheels 300, to provide driving force to the wheels 300 to drive the vehicle 1 to travel. The braking system 200 may include braking apparatuses, parking apparatuses, and brakes. The brakes may be disposed in a one-to-one correspondence with the wheels 300, and each brake may be disposed at a corresponding wheel. The braking apparatuses may respectively be in transmission connection to the brakes at the corresponding wheels 300 to provide braking force to the wheels 300 through the brakes, to stop the vehicle 1 during traveling. The parking apparatuses may also be disposed in a one-to-one correspondence with the wheels 300, and each parking apparatus may be in transmission connection to the brake at the corresponding wheel 300 to provide parking force to the wheel through the brake 300, to avoid slipping of the stopped vehicle 1.

In some embodiments, the vehicle 1 may be a fuel vehicle. In this case, the power assembly system 100 may specifically include components like an engine, a decelerator, and a transmission gearbox. Driving force output by the engine may be transmitted to the decelerator, and then transmitted to the transmission gearbox after deceleration and torque increase are performed on the driving force by the decelerator. Then, the driving force is output to the wheels 300 after being changed by the transmission gearbox based on a gear setting of the vehicle 1, to drive the vehicle 1 to travel.

In some other embodiments, the vehicle 1 may alternatively be an electric vehicle. In this case, the power assembly system 100 may specifically include a motor and a decelerator. Driving force output by the motor may be transmitted to the decelerator, and is output to the wheels 300 after deceleration and torque increase are performed on the driving force by the decelerator, to drive the vehicle 1 to travel.

FIG. 2 is a schematic diagram of a partial structure of a braking system according to an embodiment of this application. Refer to FIG. 2. A brake 10 may include a brake cylinder 11, a brake caliper 12, and a brake disc (not shown in the figure). The brake cylinder may include a cylinder body 111 and a piston 112. The piston 112 may be movably disposed in the cylinder body 111, and the piston 112 is in contact with an inner wall of the cylinder body 111. During specific implementation, one end of the cylinder body 111 may be a closed end, and the other end may be an open end. A first end 1121 of the piston 112 may be disposed toward the closed end of the cylinder body 111, and a sealed cavity 1111 is formed between the first end 1121 of the piston 112 and the closed end of the cylinder body 111. A second end 1122 of the piston 112 may extend out of the brake cylinder 11 through the open end of the cylinder body 111. The brake caliper 12 is connected to the second end 1122 of the piston 112, and the brake disc may be disposed in clamping space 121 of the brake caliper 12. The brake disc is fixedly connected to a wheel. In this way, when the piston 112 moves in the cylinder body 111, the second end 1122 of the piston 112 may drive the brake caliper 12 to clamp or release the brake disc, to implement braking or parking braking of the vehicle by applying braking force to the brake disc when the brake caliper 12 clamps the brake disc, and release braking of the vehicle when the brake caliper 12 releases the brake disc.

The brake caliper 12 may include two friction blocks 122 that are disposed oppositely, and the two friction blocks 122 may be respectively disposed on two sides of the brake disc. The two friction blocks 122 are in transmission connection by using a connector, and the two friction blocks 122 may simultaneously move toward or against each other under action of external force. It may be understood that a gap between the two friction blocks 122 is the clamping space 121 of the brake caliper.

In addition, in this embodiment of this application, a relationship between a moving direction of the piston 112 and a working state of the brake caliper 12 may be specifically as follows: When the piston 112 moves in a direction away from the closed end of the cylinder body 111, the two friction blocks 122 of the brake caliper 12 move toward each other, that is, the clamping space 121 of the brake caliper 12 shrinks, so that the brake caliper 12 can clamp the brake disc when the piston 112 moves to a specific position. When the piston 112 moves in a direction close to the closed end of the cylinder body 111, the two friction blocks 122 of the brake caliper 12 move against each other, that is, the clamping space 121 of the brake caliper 12 expands, so that the brake caliper 12 may release the brake disc.

Still refer to FIG. 2. A parking apparatus 20 may include a motor 21 and a transmission assembly, the motor 21 is located outside the brake cylinder, the transmission assembly is directly connected to an output shaft of the motor 21, and the transmission assembly may be at least partially located in the brake cylinder 11. The transmission assembly may be specifically a structure that can change a rotating motion into a linear motion. In this way, when the output shaft of the motor 21 rotates, a part of the transmission assembly that is located in the brake cylinder 11 may be driven to move. For example, the transmission assembly may include a screw 22 and a nut 23, one end of the screw 22 is directly connected to the output shaft of the motor 21, and the other end may extend into the sealed cavity 1111 of the cylinder body 111. During specific implementation, a through hole may be disposed at the closed end of the cylinder body 111, and the screw 22 may specifically extend into the sealed cavity 1111 through the through hole. The nut 23 is disposed in the sealed cavity 1111 and is mounted on the screw 22. In other words, the nut 23 and the screw 22 are in threaded connection. In this way, when the motor 21 drives the screw 22 to rotate, the nut 23 that is mounted on the screw 22 may move in an axial direction of the screw 22. In this embodiment of this application, the axial direction of the screw 22 may be consistent with a length direction of the cylinder body 111, so that a moving direction of the nut 23 in the cylinder body 111 is consistent with the moving direction of the piston 112.

It should be understood that, the moving direction of the nut 23 is determined by a rotation direction of the motor 21, and the nut 23 may move rightward or leftward by controlling forward or reverse rotation of the motor 21. The rightward movement is moving in the direction away from the closed end of the cylinder body 111. The leftward movement is moving in the direction close to the closed end of the cylinder body 111. For example, it may be set that when the motor 21 rotates forward, the nut 23 moves rightward, and when the motor 21 rotates reversely, the nut 23 moves leftward.

In some embodiments, the nut 23 may be mounted at an end part of the screw 22. For example, the nut 23 may be a cap-shaped structure with one end closed. In this way, after the nut 23 is mounted on the screw 22, the closed end of the nut 23 may always protrude from the end part of the screw 22. In addition, in this embodiment, the first end 1121 of the piston 112 may be provided with an opening 1123, and the end part of the screw 22 may extend into the opening 1123. In this case, the nut 23 is also located in the opening 1123. When the motor 21 rotates forward and drives the screw 22 to rotate, the nut 23 moves rightward, and the closed end of the nut 23 may approach or abut against the bottom of the opening 1123, to apply force in a direction away from the closed end of the cylinder body 111 to the piston 112. When the motor 21 rotates reversely and drives the screw 22 to rotate, the nut 23 moves leftward, and the closed end of the nut 23 moves away from the bottom of the opening 1123, to relieve the force applied to the piston 112.

In this embodiment of this application, the braking apparatus may specifically control an action of the brake 10 in a hydraulic driving manner. The braking apparatus may be connected to the sealed cavity 1111 of the brake cylinder 11, and the piston 112 is driven to move leftward and rightward by controlling a flow of oil that flows into the sealed cavity 1111, to control the working state of the brake caliper 12 by using the piston 112. Specifically, when oil in the braking apparatus flows into the sealed cavity 1111 of the brake cylinder 11, hydraulic pressure inside the sealed cavity 1111 increases, and the piston 112 may move rightward, to drive the brake caliper 12 to clamp the brake disc, thereby implementing braking of the wheels. When the oil in the braking apparatus flows out of the sealed cavity 1111 of the brake cylinder 11, the hydraulic pressure inside the sealed cavity 1111 decreases, and the piston 112 may move leftward, to release braking force applied to the brake disc.

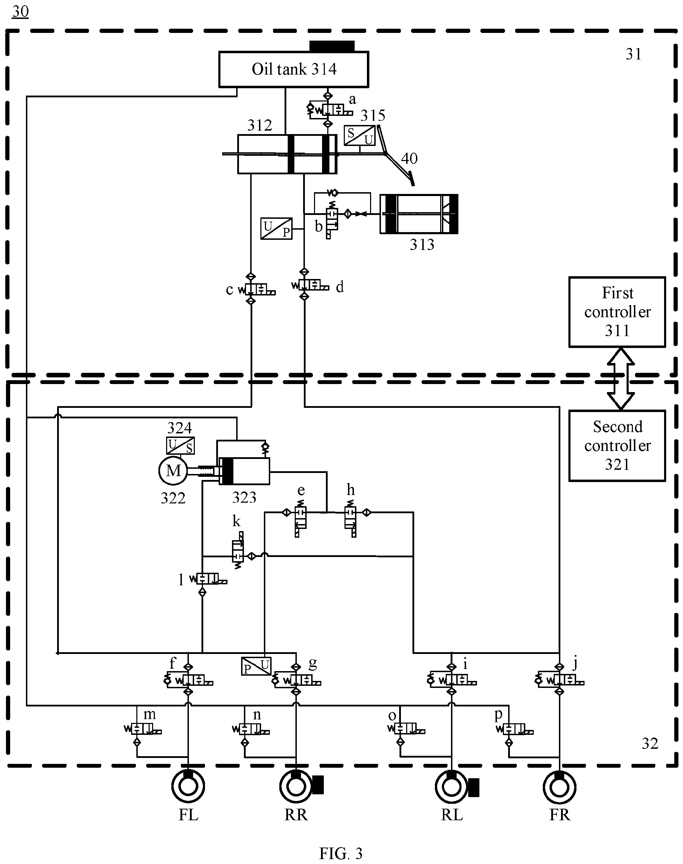

FIG. 3 is a schematic diagram of a structure of a braking apparatus according to an embodiment of this application. Refer to FIG. 3. A braking apparatus 30 may include two sets of hydraulic apparatuses, a first hydraulic apparatus 31 and a second hydraulic apparatus 32. The first hydraulic apparatus 31 may be specifically an intelligent braking system (intelligent braking system, IBS), and the second hydraulic apparatus 32 may be specifically a redundant brake unit (redundant brake unit, RBU). The first hydraulic apparatus 31 and the second hydraulic apparatus 32 are separately connected to a brake cylinder of a brake, and can work together to control operation of the brake to improve control precision of pressure inside the brake cylinder. Alternatively, the first hydraulic apparatus 31 and the second hydraulic apparatus 32 may separately control the operation of the brake. In other words, the first hydraulic apparatus 31 and the second hydraulic apparatus 32 may work in redundancy mode. In this way, even if one of the hydraulic apparatuses is faulty, normal operation of the entire braking apparatus 30 can be ensured, thereby improving reliability of the braking apparatus 30.

During specific implementation, the first hydraulic apparatus 31 may include a first controller 311, a master cylinder 312, a pedal feel simulator 313, an oil tank 314, a travel sensor 315, a liquid level sensor, a solenoid valve, a check valve, a brake pipe, and the like. The second hydraulic apparatus 32 may include a second controller 321, a three-phase motor 322, an electric cylinder 323, a motor position sensor 324, a solenoid valve, a check valve, a pressure sensor, a brake pipe, and the like. In addition, the braking apparatus may further include at least various solenoid valve drives, motor drives, and various signal processing and control output interfaces. The first controller 311 and the second controller 321 may receive measurement or detection signals, including information such as environmental conditions, driver input, and braking system statuses, of various sensors, and control braking features of the braking apparatus 30 through calculation and judgment.

When the first hydraulic apparatus 31 works with the second hydraulic apparatus 32, the first controller 311 may control a solenoid valve a and a solenoid valve b to open, and control a solenoid valve c and a solenoid valve d to close. A brake pedal 40 pushes oil in the master cylinder 312 to flow into the pedal feel simulator 313 through the solenoid valve b. In addition, the first controller 311 collects a signal of the travel sensor 315, a signal of a pressure sensor at the master cylinder 312, and an oil level signal of the oil tank 314, and transmits the signals to the second controller 321 through a signal interface. The second controller 321 determines a braking intention of a driver based on the signal of the travel sensor 315 and the signal of the pressure sensor at the master cylinder 312 that are transmitted by the first controller 311, controls the three-phase motor 322 to push a piston in the electric cylinder 323 to move rightward, and controls a solenoid valve e, a solenoid valve f, a solenoid valve g, a solenoid valve h, a solenoid valve i, a solenoid valve j, a solenoid valve k, and a solenoid valve l to open. One part of oil in a right cavity of the electric cylinder 323 is divided into two flows. One flow of the oil flows into brake cylinders at two wheels (namely, the front left (front left, FL) wheel and the rear right (rear right, RR) wheel) through the opened solenoid valve e, solenoid valve f, and solenoid valve g. The other flow of the oil flows into brake cylinders at the other two wheels (namely, the rear left (rear left, RL) wheel and the front right (front right, FR) wheel) through the opened solenoid valve h, solenoid valve i, and solenoid valve j. This implements braking of the four wheels. The other part of oil in the right cavity of the electric cylinder 323 flows into a left cavity of the electric cylinder 323 through the opened solenoid valve k and solenoid valve l.

It should be noted that, when pressure inside a brake cylinder at a specific wheel is too high, the second controller 321 may control a solenoid valve (namely, one of the foregoing solenoid valve f, solenoid valve g, solenoid valve i, and solenoid valve j) that is connected to the electric cylinder and the master cylinder and that is at the brake cylinder to close, and control a solenoid valve (one of the foregoing solenoid valve m, solenoid valve n, solenoid valve o, and solenoid valve p) that is connected to the oil tank 314 and that is at the brake cylinder to open. This enables oil in the brake cylinder to flow into the oil tank 314 and implements pressure relief. For example, when pressure inside the brake cylinder at the front left FL wheel is too high, the solenoid valve f may be closed, an oil passage between the right cavity of the electric cylinder 323 and the brake cylinder at the FL wheel may be cut off, and the solenoid valve m may be opened. In this way, oil in the brake cylinder at the FL wheel flows into the oil tank through the solenoid valve m.

When the second hydraulic apparatus 32 is faulty, for example, when the motor 322 or the electric cylinder 323 is faulty, the first controller 311 may control the solenoid valve a, the solenoid valve b, the solenoid valve c, and the solenoid valve d to open. A part of oil in the master cylinder 312 flows into the brake cylinders at two of the wheels (namely, FL wheel and RR wheel) through the opened solenoid valve c, solenoid valve f and solenoid valve g. The other part of oil flows into the brake cylinders at the other two wheels (namely, RL wheel and FR wheel) through the opened solenoid valve d and solenoid valve i and j. This implements braking of the four wheels.

When the first hydraulic apparatus is faulty, for example, when the master cylinder 312 or the pedal feel simulator 313 is faulty, the first controller 311 may collect the signal of the travel sensor 315 and the level signal of the oil tank 314, and transmit the signals to the second controller 312 through the signal interface. The second controller 312 controls, based on the signal of the travel sensor 315 transmitted by the first controller 311, the three-phase motor 322 to push the piston in the electric cylinder 323 to move rightward, and controls the solenoid valve e, the solenoid valve f, the solenoid valve g, the solenoid valve h, the solenoid valve i, the solenoid valve j, the solenoid valve k, and the solenoid valve l to open. One part of the oil in the right cavity of the electric cylinder 323 is divided into two flows. One flow of the oil flows into the brake cylinders at two wheels (namely, the FL wheel and the RR wheel) through the opened solenoid valve e, solenoid valve f, and solenoid valve g. The other flow of the oil flows into the brake cylinders at the other two wheels (namely, the RL wheel and the FR wheel) through the opened solenoid valve h, solenoid valve i, and solenoid valve j. This implements braking of the four wheels. The other part of oil in the right cavity of the electric cylinder 323 flows into the left cavity of the electric cylinder 323 through the opened solenoid valve k and solenoid valve l.

Refer to FIG. 2 and FIG. 3. In this embodiment of this application, the braking system 200 may further include a control unit. The control unit may be separately electrically connected to the braking apparatus 30 and the parking apparatus 20. The control unit may be configured to: obtain a parking signal of the vehicle; control, based on the parking signal, the braking apparatus 30 to drive the piston 112 to move to apply braking force to the brake disc; and when the second end 1122 of the piston 112 moves to a first position, control the motor 21 to drive the screw 22 to rotate, to drive, through the screw 22, the nut 23 to move, thereby enabling the nut 23 to abut against the first end 1121 of the piston 112. In other words, the closed end of the nut 23 abuts against the bottom of the opening of the piston 1123, so that the piston 112 is fastened in a current position, and the brake caliper 12 is kept in a working state of clamping the brake disc. This implements parking braking of the vehicle. In addition, the control unit may be further configured to: obtain hydraulic pressure inside the brake cylinder 11 (namely, the hydraulic pressure inside the sealed cavity 1111), and when it is determined that the hydraulic pressure inside the brake cylinder 11 is not less than target hydraulic pressure, control the second end 1122 of the piston 112 to move to the first position. In other words, when the braking system in this application performs parking braking, the braking apparatus 30 first generates corresponding target hydraulic pressure to push the piston 112 to move, so that the brake caliper 12 clamps the brake disc, and then controls the motor 21 to drive the nut 23 to move to a position abutting against the piston 112. Assistance is provided by the braking apparatus 30 when parking is performed, so that torque output by the motor 21 of the parking apparatus 20 is small, and power required from the motor 21 is also small. In this case, costs of the motor 21 can be reduced. In addition, a deceleration mechanism for increasing torque can be omitted from the parking apparatus 20. This can simplify a structure of the parking apparatus 20, and improve overall NVH performance of the vehicle.

It should be noted that after the nut 23 moves to a position abutting against the first end 1121 of the piston 112, the control unit may control the motor 21 to stop working, and then control the braking apparatus 30 to stop applying the braking force to the brake disc. In other words, the control unit controls the first hydraulic apparatus 31 and the second hydraulic apparatus 32 to exit pressure building, and the brake caliper 12 can clamp the brake disc by fully depending on abutting action of the nut 23.

In some implementations, the control unit is further configured to: when it is determined that the first hydraulic apparatus 31 is faulty, control the second hydraulic apparatus 32 to drive the piston to move; similarly, when it is determined that the second hydraulic apparatus 32 is faulty, control the first hydraulic apparatus 31 to drive the piston to move; and when it is determined that neither the first hydraulic apparatus 31 nor the second hydraulic apparatus 32 is faulty, control the first hydraulic apparatus 31 and the second hydraulic apparatus 32 to jointly drive the piston to move. The first hydraulic apparatus 31 and the second hydraulic apparatus 32 may work in redundancy mode by using this design. When one of the hydraulic apparatuses is faulty, the other may continue to work. This ensures that the vehicle completes an entire parking action and meets a function safety requirement for vehicle running.

In this embodiment of this application, the control unit may be further configured to: obtain a running status of the vehicle, determine a parking mode of the vehicle based on the running status of the vehicle, and determine the target hydraulic pressure based on the parking mode. It should be noted that the target hydraulic pressure of the vehicle determines a position of the second end of the piston, and further determines force applied to the brake disc when the vehicle remains in a parked state. The target hydraulic pressure of the vehicle is related to the running status of the vehicle. For example, that whether the vehicle has an external request, and information, for example, a vehicle speed and a wheel speed of the vehicle, directly affect target parking force.

When determining the parking mode of the vehicle, the control unit may be further configured to: determine whether the vehicle has the external request; when it is determined that the vehicle does not have the external request and the running status of the vehicle meets a parking condition, determine that the vehicle is in a first parking mode, and determine first parking force based on a vehicle parameter, where the first parking force is the target hydraulic pressure; or when it is determined that the vehicle has the external request, and the running status of the vehicle does not meet a parking condition, determine that the vehicle is in a second parking mode, and determine second parking force based on the external request, where the second parking force is the target hydraulic pressure; or when it is determined that the vehicle has the external request and the running condition of the vehicle meets a parking condition, determine that the vehicle is in a third parking mode, and determine first parking force as the target hydraulic pressure, or determine a larger value in the first parking force and second parking force as the target hydraulic pressure.

The external request of the vehicle includes but is not limited to that the vehicle is in an intelligent driving mode, the vehicle is in an anti-lock braking mode, the vehicle is in a driving assistance mode, or the like. The parking condition of the vehicle includes whether the vehicle receives a parking instruction and whether the vehicle speed, the wheel speed, a throttle pedal opening degree of the vehicle, and the like meet the requirements. The vehicle parameter includes one or more of a slope of a road on which the vehicle is located, mass of the vehicle, whether the vehicle is provided with a trailer, and whether a temperature of the brake disc is greater than or equal to a temperature threshold.

When determining whether the running status of the vehicle meets the parking condition, the control unit may be further configured to: when it is determined that the vehicle receives the parking instruction, determine, based on facts that the vehicle speed of the vehicle is less than or equal to a parking speed threshold, the wheel speed of the vehicle is less than or equal to a parking wheel speed threshold, the wheel speed of the vehicle is less than or equal to a parking wheel speed threshold, and the throttle pedal opening degree of the vehicle is less than or equal to an opening degree threshold, that the running status of the vehicle meets the parking condition.

It should be understood that the parking instruction may be specifically sent by the driver, a parking control button may be disposed in a cabin of the vehicle, the parking control button may be electrically connected to the control unit, and the driver may send the parking instruction by activating the parking control button. After it is confirmed that the parking instruction is received, whether the vehicle speed and the wheel speed of the vehicle meet threshold requirements are determined in sequence. Generally speaking, the vehicle speed is equal to the wheel speed when the wheels are pure rolling. In this case, as long as the vehicle speed meets a set threshold requirement, the wheel speed may also meet a corresponding threshold requirement. However, if the wheels move, the vehicle speed and the wheel speed are no longer equal. Therefore, by separately determining whether the vehicle speed and the wheel speed meet the requirements, whether the vehicle meets the parking condition may be more accurately determined. In addition, parameter values such as the parking speed threshold, the parking wheel speed threshold, and the throttle pedal opening degree may be determined through tests, or may be obtained through experience. This is not specifically limited in this application.

In addition, it should be noted that, in a process of determining whether the running status of the vehicle meets the parking condition, if the vehicle does not receive the parking instruction, the subsequent three conditions (the vehicle speed, the wheel speed, and the throttle pedal opening degree) do not need to be determined. A step of returning to determine whether the vehicle receives the parking instruction is performed until it is confirmed that the parking instruction is received. Then a step of continuing to determine whether the vehicle speed, the wheel speed, and the throttle pedal opening degree meet set conditions is performed until it is determined that all the four conditions meet the set conditions.

When the vehicle is in the parked state, it may also move under action of external forces or impact of an external environment in a case of non-driver operation. Therefore, there is a specific risk of slipping. To further reduce the risk, in embodiments of this application, the control unit may be further configured to: identify, based on information such as the wheel speed and a traveling direction of the vehicle, whether the vehicle is in a slipping state; and when it is determined that the vehicle is in the slipping state, control the braking apparatus 30 to drive the piston to move, to apply the braking force to the brake disc to restore the vehicle from the slipping state to a stationary state. At this time, after the second end of the piston moves to a second position, the control unit may control the motor 21 to drive the screw 22 to rotate, so that the nut 23 also moves to abut against the first end 1121 of the piston 112 again, to fasten the piston 112 in a position after movement. This implements re-parking braking of the vehicle. It may be understood that, a position of the piston 112 moves to the right relative to an initial parking braking. In other words, the second position is located on a side that is of the first position and that is away from the nut.

In addition, when the parking braking is released, the control unit may control the braking apparatus 30 to continue to drive the piston 112 to move, so that the second end 1122 of the piston 112 moves to a third position, where the third position is located on a side that is of the first position and that is away from the nut 23, that is, on the right side of the first position. In this way, a specific gap is formed between the nut 23 and the first end 1121 of the piston 112, so that a load of the motor 21 is released, and the motor 21 can smoothly rotate forward or reversely. Thereafter, the control unit may control the motor 21 to rotate reversely so that the nut 23 is returned to a starting position, and finally, control the braking apparatus 30 to stop pressure building to release the parking braking of the vehicle. It should be understood that if the vehicle slips in a process of parking, the third position to which the second end of the piston 112 is moved by the braking apparatus 30 should be located on the right side of the second position when the parking braking is released. This ensures that the gap can be formed between the nut 23 and the first end 1121 of the piston 112.

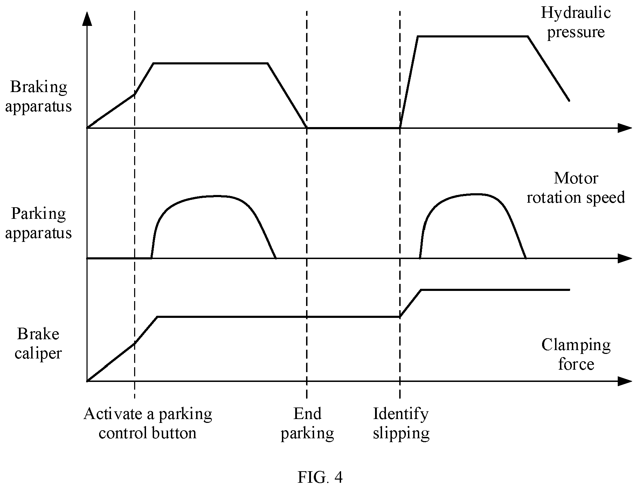

FIG. 4 is a schematic diagram of working conditions of a braking system according to an embodiment of this application. Refer to FIG. 2, FIG. 3, and FIG. 4. When the vehicle starts parking braking from a traveling state, the braking apparatus 30 drives the piston 112 to move rightward, the piston 112 drives the brake caliper 12 to clamp the brake disc gradually, and the hydraulic pressure inside the sealed cavity 1111 gradually increases. The driver may activate the parking control button in this process. When the hydraulic pressure inside the sealed cavity 1111 increases to be equal to the target hydraulic pressure, the motor 21 is started, and a rotation speed of the motor 21 may first increase and then decrease to drive the nut 23 to move rightward. When the nut 23 is pushed to a position abutting against the piston 112, the motor 21 stops working, the braking apparatus 30 exits the pressure building, and the hydraulic pressure inside the sealed cavity 1111 gradually decreases to zero. At this time, the brake caliper 12 can clamp the brake disc by fully depending on abutting action of the nut 23 to implement parking braking of the vehicle. When the vehicle is in the process of parking, clamping force on the brake disc gradually increases and then remains at a fixed value.

When the vehicle slips in the process of parking, the braking apparatus 30 drives the piston 112 to move rightward again until the second end 1122 of the piston 112 moves to the second position, so that the vehicle is restored from the slipping state to the stationary state. Thereafter, the motor 21 is started to drive the nut 23 to move to the position abutting against the piston 112 again, thereby implementing re-parking braking of the vehicle. Then, the motor 21 stops working, the braking apparatus 30 exits the pressure building, and the hydraulic pressure inside the sealed cavity 1111 gradually reduces to zero. In a process from the slipping state to the re-parking braking, the clamping force on the brake disc increases accordingly and finally remains at a fixed value.

An embodiment of this application further provides a braking system control method. For a structure of the braking system, refer to the descriptions in the foregoing embodiments. Details are not described herein again. The control method may include the following steps:
obtaining a parking signal;
controlling, based on the parking signal, a braking apparatus to drive a piston of a brake cylinder to move; and
when the piston moves to a first position, controlling a motor of a parking apparatus to drive a transmission assembly to move to a position abutting against a first end of the piston.

In a possible embodiment, the control method may further include:
obtaining hydraulic pressure inside the brake cylinder; and
when the hydraulic pressure inside the brake cylinder is greater than or equal to target hydraulic pressure, controlling a second end of the piston to move to the first position. It may be understood that the first position is a position at which the second end of the piston is located when a brake caliper clamps a brake disc so that the brake disc stops rotating.

According to the braking system control method provided in this embodiment of this application, when parking braking is performed, the braking apparatus first generates corresponding braking force, so that the brake caliper clamps the brake disc, and then controls the motor to drive a nut to move to a position abutting against the piston. Assistance is provided by the braking apparatus when parking is performed, so that torque output by the motor of the parking apparatus is small, and power required from the motor is also small. In this case, costs of the motor can be reduced. In addition, a deceleration mechanism for increasing torque can be omitted from the parking apparatus. This can simplify a structure of the parking apparatus, and improve overall NVH performance of a vehicle.

In some embodiments, the braking system control method may further include:
when a first hydraulic apparatus is faulty, controlling a second hydraulic apparatus to drive the piston to move; or
when it is determined that a second hydraulic apparatus is faulty, controlling a first hydraulic apparatus to drive the piston to move; or
when it is determined that neither a first hydraulic apparatus nor a second hydraulic apparatus is faulty, controlling the first hydraulic apparatus and the second hydraulic apparatus to drive the piston to move.

The first hydraulic apparatus and the second hydraulic apparatus may work in redundancy mode by using this design. When one of the hydraulic apparatuses is faulty, the other may continue to work. This ensures that the vehicle completes an entire parking action and meets a function safety requirement for vehicle running.

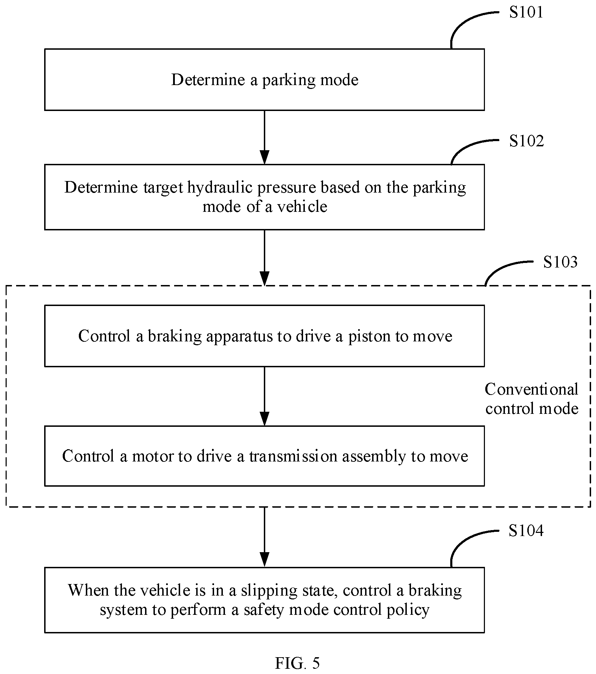

It should be noted that, before obtaining the target hydraulic pressure, a parking mode of the vehicle may be first determined based on a running status of the vehicle, and then the target hydraulic pressure is calculated based on the determined parking mode. In addition, after parking braking is completed, the vehicle may still slip under impact of an external environment or action of external force. For a slipping condition, the foregoing control method may further include a step of a safety mode control policy, so that re-parking braking is performed on the vehicle when slipping occurs. Based on this, refer to FIG. 5. The braking system control method provided in this embodiment of this application may specifically include the following steps.

Step S101: Determine a parking mode.

Step S102: Determine target hydraulic pressure based on the parking mode of a vehicle.

Step S103: In a conventional control mode, control a braking apparatus to drive a piston to move, and control a motor to drive a transmission assembly to move.

Step S104: When the vehicle is in a slipping state, control a braking system to perform a safety mode control policy.

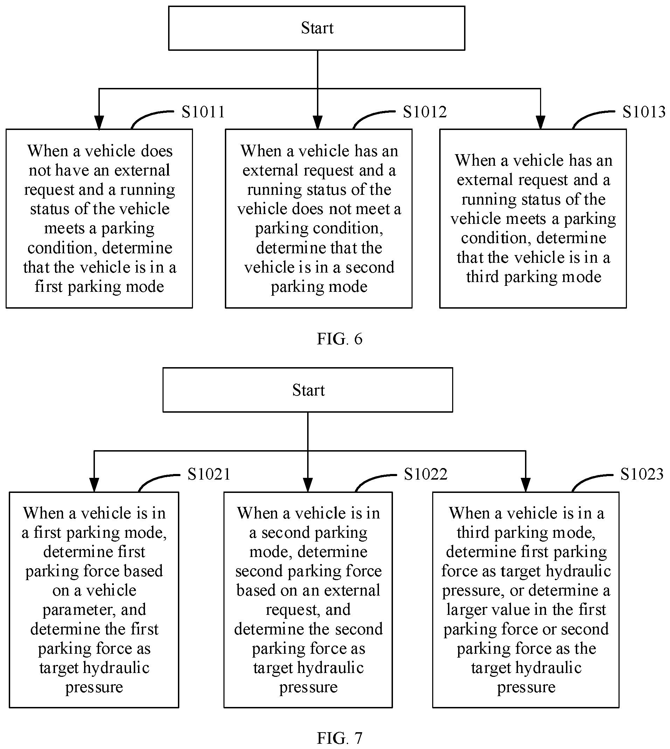

FIG. 6 is a specific flowchart of step 101 shown in FIG. 5. Refer to FIG. 6. Step S101 may specifically include the following steps.

Step S 1011: When it is determined that a vehicle does not have an external request and a running status of the vehicle meets a parking condition, determine that the vehicle is in a first parking mode.

Step S1012: When it is determined that a vehicle has an external request and a running status of the vehicle does not meet a parking condition, determine that the vehicle is in a second parking mode.

Step S 1013: When it is determined that a vehicle has an external request and a running status of the vehicle meets a parking condition, determine that the vehicle is in a third parking mode.

The external request of the vehicle includes but is not limited to that the vehicle is in an intelligent driving mode, the vehicle is in an anti-lock braking mode, the vehicle is in a driving assistance mode, or the like. The parking condition of the vehicle includes whether the vehicle receives a parking instruction and whether the vehicle speed, the wheel speed, a throttle pedal opening degree of the vehicle, and the like meet the requirements.

Determining that the running status of the vehicle meets the parking condition may specifically include:
when it is determined that the vehicle receives the parking instruction, determining, based on facts that the vehicle speed of the vehicle is less than or equal to a parking speed threshold, the wheel speed of the vehicle is less than or equal to a parking wheel speed threshold, the wheel speed of the vehicle is less than or equal to a parking wheel speed threshold, and the throttle pedal opening degree of the vehicle is less than or equal to an opening degree threshold, that the running status of the vehicle meets the parking condition.

It may be understood that, in a process of determining whether the running status of the vehicle meets the parking condition, it may be determined that the parking condition is not met as long as one of the foregoing four conditions is not met. For example, if the vehicle does not receive the parking instruction, it is determined that the running status of the vehicle does not meet the parking condition without performing determining on the following three conditions (the vehicle speed, the wheel speed, and the throttle pedal opening degree). When it is determined that the vehicle receives the parking instruction, and the vehicle speed of the vehicle is not less than or not equal to the parking speed threshold, it is determined that the running status of the vehicle does not meet the parking condition without performing determining on the other two conditions (the wheel speed and the throttle pedal opening degree). The rest can be deduced by analogy.

FIG. 7 is a specific flowchart of step S102 shown in FIG. 5. Refer to FIG. 7. Step 102 may specifically include the following steps.

Step S1021: When a vehicle is in a first parking mode, determine first parking force based on a vehicle parameter, where the first parking force is target hydraulic pressure.

Step S1022: When a vehicle is in a second parking mode, determine second parking force based on an external request, where in this case, the second parking force is target hydraulic pressure.

Step S1023: When a vehicle is in a third parking mode, determine first parking force as target hydraulic pressure, or determine a larger value in the first parking force or second parking force as the target hydraulic pressure.

The vehicle parameter includes one or more of a slope of a road on which the vehicle is located, mass of the vehicle, whether the vehicle is provided with a trailer, and whether a temperature of the brake disc is greater than or equal to a temperature threshold.

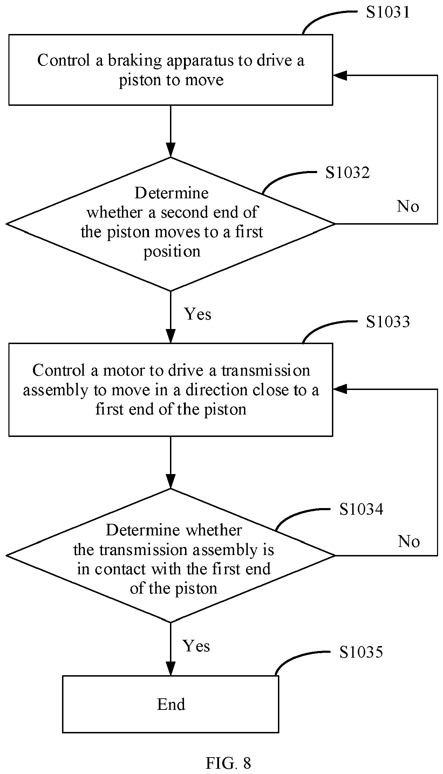

FIG. 8 is a specific flowchart of step S103 shown in FIG. 5. Refer to FIG. 8. Step S103 may specifically include the following steps.

Step S1031: Control the braking apparatus to drive the piston to move.

Step S1032: Determine whether the second end of the piston moves to the first position; and if yes, perform step S1033, or if no, return to perform step S1031.

Step S1033: Control the motor to drive the transmission assembly to move in a direction close to the first end of the piston.

Step S1034: Determine whether the transmission assembly is in contact with the first end of the piston; and if yes, perform step S1035, or if no, return to perform step 1033.

Step S103 5: End the control.

In this embodiment of this application, step S104 may specifically include:
identifying, based on information such as the wheel speed and a traveling direction of the vehicle, whether the vehicle is in a slipping state; and when it is determined that the vehicle is in the slipping state, controlling the braking apparatus to drive the piston to move to a second position, where the second position is specifically located on a side that is of the first position and that is away from the nut, so that the brake caliper is pushed by the piston to clamp the brake disc again, thereby restoring the vehicle from the slipping state to a stationary state. After it is determined that the vehicle is in the stationary state, the motor is controlled to drive the screw to rotate, and the screw drives the nut to move to a position abutting against the first end of the piston, to implement re-parking braking of the vehicle.

Based on a same technical concept, an embodiment of this application further provides a computing device 1100. The computing device 1100 may be a chip or a chip system. Optionally, in this embodiment of this application, the chip system may include a chip, or may include a chip and another discrete component.

The computing device 1100 may include at least one processor 1110. The processor 1110 is coupled to a memory. Optionally, the memory may be located in the apparatus, the memory may be integrated with the processor, or the memory may be located outside the apparatus. For example, the computing device 1100 may further include at least one memory 1120. The memory 1120 stores a computer program, configuration information, a computer program or instructions, and/or data necessary for implementing any one of the foregoing embodiments. The processor 1110 may execute the computer program stored in the memory 1120, to complete the method in any one of the foregoing embodiments.

The computing device 1100 may further include a communication interface 1130, and the computing device 1100 may exchange information with another device by using the communication interface 1130. For example, the communication interface 1130 may be a transceiver, a circuit, a bus, a module, a pin, or another type of communication interface. When the computing device 1100 is a chip-type apparatus or a circuit, the communication interface 1130 in the apparatus 1100 may alternatively be an input/output circuit, and may input information (or is referred to as receiving information) and output information (or is referred to as sending information). The processor is an integrated processor, a microprocessor, an integrated circuit, or a logic circuit, and the processor may determine output information based on input information.

The coupling in this embodiment of this application is an indirect coupling or a communication connection between apparatuses, units, or modules, may be in an electrical form, a mechanical form, or another form, and is used for information exchange between the apparatuses, units, or modules. The processor 1110 may work with the memory 1120 and the communication interface 1130. A specific connection medium between the processor 1110, the memory 1120, and the communication interface 1130 is not limited in embodiments of this application.

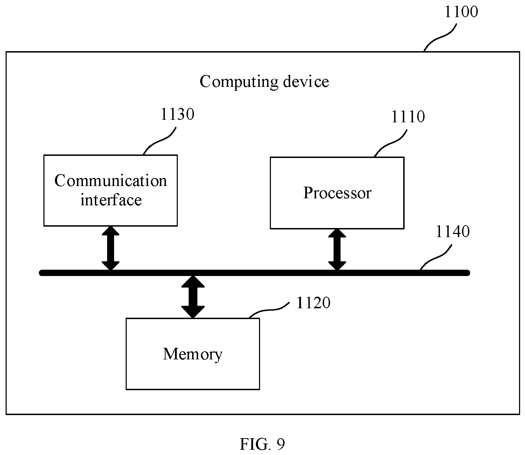

Optionally, refer to FIG. 9. The processor 1110, the memory 1120, and the communication interface 1130 are connected to each other by using a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams in embodiments of this application. The general-purpose processor may be a microprocessor, any conventional processor, or the like. The steps of the methods in embodiments applied for with reference to embodiments of this application may be directly performed by a hardware processor, or may be performed by using a combination of hardware in the processor and a software module.

In embodiments of this application, the memory may be a non-volatile memory, like a hard disk drive (hard disk drive, HDD) or a solid-state drive (solid-state drive, SSD), or may be a volatile memory (volatile memory), like a random-access memory (random-access memory, RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

In a possible implementation, the computing device 1100 may be applied to a transmit end. Specifically, the computing device 1100 may be a transmit end, or may be an apparatus that can support the transmit end and implement a function of the transmit end in any one of the foregoing embodiments. The memory 1120 stores a computer program and computer program instructions and/or data required for implementing the function of the transmit end in any one of the foregoing embodiments. The processor 1110 may execute the computer program stored in the memory 1120, to complete the method performed by the transmit end in any one of the foregoing embodiments. Applied to the transmit end, the communication interface of the computing device 1100 may be configured to interact with a receive end, for example, send information to the receive end.

In a possible implementation, the computing device 1100 may be applied to the receive end. Specifically, the computing device 1100 may be the receive end, or may be an apparatus that can support the receive end and implement a function of the receive end in any one of the foregoing embodiments. The memory 1120 stores a computer program and computer program instructions and/or data required for implementing the function of the receive end in any one of the foregoing embodiments. The processor 1110 may execute the computer program stored in the memory 1120, to complete the method performed by the receive end in any one of the foregoing embodiments. Applied to the receive end, the communication interface of the computing device 1100 may be configured to interact with the transmit end, for example, receive information from the transmit end.

The computing device 1100 provided in embodiments may be applied to the transmit end to complete the method performed by the transmit end, or may be applied to the receive end to complete the method performed by the receive end. Therefore, for technical effect that can be achieved, refer to the foregoing method embodiments. Details are not described herein again.

Based on the foregoing embodiments, an embodiment of this application further provides a computer program. When the computer program is run on a computer, the computer is enabled to implement the method provided in any embodiment shown in FIG. 5 to FIG. 8.

Based on the foregoing embodiments, an embodiment of this application further provides a computer-readable storage medium, where the computer-readable storage medium stores a computer program. When the computer program is executed by a computer, the computer is enabled to implement the method provided in the embodiment shown in any one of embodiments shown in FIG. 5 to FIG. 8. The storage medium may be any available medium that can be accessed by the computer. Examples of the computer-readable medium include but are not limited to a RAM, a read-only memory (read-only memory, ROM), an electrically erasable programmable read-only memory (electrically erasable programmable read-only memory, EEPROM), a CD-ROM or other optical disc storage, a disk storage medium or other disk storage, or any other medium that can be used to carry or store expected program code in a form of instructions or a data structure and can be accessed by the computer.

All or some of the technical solutions provided in embodiments of this application may be implemented by using software, hardware, firmware, or any combination thereof. When software is used for implementation, all or part of the implementation may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, an access network device, a terminal device, or another programmable apparatus. The computer instructions may be stored in a computer-readable storage medium, or transmitted from one computer-readable storage medium to another computer-readable storage medium. For example, the computer instruction may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a digital video disc (digital video disc, DVD)), a semiconductor medium, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A braking system, comprising a brake cylinder, a braking apparatus, and a parking apparatus, wherein
the brake cylinder comprises a piston, a first end of the piston is located in the brake cylinder, and a second end of the piston extends out of the brake cylinder;
the braking apparatus is connected to the brake cylinder and is configured to drive the piston to move; and
the parking apparatus comprises a motor and a transmission assembly, the motor is directly connected to the transmission assembly, the transmission assembly is at least partially located in the brake cylinder, and the motor is configured to drive the transmission assembly to move in the brake cylinder.

2. The braking system according to claim 1, wherein the transmission assembly comprises a screw and a nut, an output shaft of the motor is directly connected to the screw, the screw extends into the brake cylinder, and the nut is disposed in the brake cylinder and mounted on the screw.

3. The braking system according to claim 1 or 2, wherein the braking system further comprises a brake caliper and a brake disc, the brake caliper is connected to the second end of the piston, and the brake disc is disposed in clamping space of the brake caliper.

4. The braking system according to claim 3, wherein the braking system further comprises a control unit, and the control unit is configured to:
obtain a parking signal, and control, based on the parking signal, the braking apparatus to drive the piston to move; and
when the second end of the piston moves to a first position, control the motor to drive the transmission assembly to move to a position abutting against the first end of the piston.

5. The braking system according to claim 4, wherein the control unit is further configured to:
obtain hydraulic pressure inside the brake cylinder; and
when the hydraulic pressure inside the brake cylinder is greater than or equal to target hydraulic pressure, control the second end of the piston to move to the first position.

6. The braking system according to claim 4 or 5, wherein the first position is a position at which the second end of the piston is located when the brake caliper clamps the brake disc.

7. The braking system according to any one of claims 4 to 6, wherein the braking apparatus comprises a first hydraulic apparatus and a second hydraulic apparatus, and the first hydraulic apparatus and the second hydraulic apparatus are separately connected to the brake cylinder; and
the control unit is further configured to:
when the first hydraulic apparatus is faulty, control the second hydraulic apparatus to drive the piston to move; or
when the second hydraulic apparatus is faulty, control the first hydraulic apparatus to drive the piston to move; or
when neither the first hydraulic apparatus nor the second hydraulic apparatus is faulty, control the first hydraulic apparatus and the second hydraulic apparatus to jointly drive the piston to move.

8. The braking system according to any one of claims 4 to 7, wherein the control unit is further configured to:
obtain a running status of a vehicle, determine a parking mode of the vehicle based on the running status of the vehicle, and determine the target hydraulic pressure based on the parking mode.

9. The braking system according to claim 8, wherein the control unit is further configured to:
when the vehicle does not have an external request and the running status of the vehicle meets a parking condition, determine a first parking mode, and determine first parking force based on a vehicle parameter, wherein the first parking force is the target hydraulic pressure; or
when the vehicle has an external request, and the running status of the vehicle does not meet a parking condition, determine a second parking mode, and determine second parking force based on the external request, wherein the second parking force is the target hydraulic pressure; or
when the vehicle has an external request and the running condition of the vehicle meets a parking condition, determine a third parking mode, and determine first parking force as the target hydraulic pressure, or determine a larger value in the first parking force and second parking force as the target hydraulic pressure.

10. The braking system according to claim 9, wherein the control unit is further configured to:
when the vehicle receives a parking instruction, determine, based on facts that a vehicle speed of the vehicle is less than or equal to a parking speed threshold, a wheel speed of the vehicle is less than or equal to a parking wheel speed threshold, and a throttle pedal opening degree of the vehicle is less than or equal to an opening degree threshold, that the running status of the vehicle meets the parking condition.

11. The braking system according to claim 9 or 10, wherein the vehicle parameter comprises one or more of a slope of a road on which the vehicle is located, mass of the vehicle, whether the vehicle is provided with a trailer, or a temperature of the brake disc.

12. The braking system according to any one of claims 4 to 11, wherein the control unit is further configured to:
when the vehicle is in a slipping state, control the braking apparatus to drive the piston to move; and
when the second end of the piston moves to a second position, control the transmission assembly to move to a position abutting against the first end of the piston, wherein
the second position is located on a side that is of the first position and that is away from the first end of the piston.

13. A braking system control method, comprising:
obtaining a parking signal;
controlling, based on the parking signal, a braking apparatus to drive a piston of a brake cylinder to move; and
when a second end of the piston moves to a first position, controlling a motor of a parking apparatus to drive a transmission assembly to move to a position abutting against a first end of the piston.

14. The control method according to claim 13, wherein the control method further comprises:
obtaining hydraulic pressure inside the brake cylinder; and
when the hydraulic pressure inside the brake cylinder is greater than or equal to target hydraulic pressure, controlling the second end of the piston to move to the first position.

15. The control method according to claim 13 or 14, wherein the first position is a position at which the second end of the piston is located when a brake caliper of the braking system clamps a brake disc.

16. The control method according to any one of claims 13 to 15, wherein the controlling a braking apparatus to drive a piston of a brake cylinder to move specifically comprises:
when a first hydraulic apparatus is faulty, controlling a second hydraulic apparatus to drive the piston to move; or when a second hydraulic apparatus is faulty, controlling a first hydraulic apparatus to drive the piston to move; or when neither a first hydraulic apparatus nor a second hydraulic apparatus is faulty, controlling the first hydraulic apparatus and the second hydraulic apparatus to jointly drive the piston to move.

17. The control method according to any one of claims 13 to 16, wherein the control method further comprises:
obtaining a running status of a vehicle, determining a parking mode of the vehicle based on the running status of the vehicle, and determining the target hydraulic pressure based on the parking mode.

18. The control method according to claim 17, wherein the control method further comprises:
when the vehicle does not have an external request and the running status of the vehicle meets a parking condition, determining a first parking mode, and determining first parking force based on a vehicle parameter, wherein the first parking force is the target hydraulic pressure; or
when the vehicle has an external request, and the running status of the vehicle does not meet a parking condition, determining a second parking mode, and determining second parking force based on the external request, wherein the second parking force is the target hydraulic pressure; or
when the vehicle has an external request and the running condition of the vehicle meets a parking condition, determining a third parking mode, and determining first parking force as the target hydraulic pressure, or determining a larger value in the first parking force and second parking force as the target hydraulic pressure.

19. The control method according to any one of claims 13 to 18, wherein the control method further comprises:
when the vehicle receives a parking instruction, determining, based on one or more of facts that a vehicle speed of the vehicle is less than or equal to a parking speed threshold, a wheel speed of the vehicle is less than or equal to a parking wheel speed threshold, and a throttle pedal opening degree of the vehicle is less than or equal to an opening degree threshold, that the running status of the vehicle meets the parking condition.

20. The control method according to any one of claims 13 to 19, wherein the control method further comprises:
when the vehicle is in a slipping state, controlling the braking apparatus to drive the piston to move; and
when the second end of the piston moves to the first position, controlling the transmission assembly to move to a position abutting against the first end of the piston, wherein
the second position is located on a side that is of the first position and that is away from the first end of the piston.

21. A computing device, comprising:
a processor, wherein the processor is coupled to a memory, the memory stores program instructions, and the processor is configured to execute the program instructions, to implement the method according to any one of claims 13 to 20.

22. A computer-readable storage medium, wherein the computer-readable storage medium stores instructions, and when the instructions are run on a computer, the computer is enabled to implement the method according to any one of claims 13 to 20.

23. A computer program, comprising instructions, wherein when the instructions are run on a computer, the computer is enabled to implement the method according to any one of claims 13 to 20.

24. A vehicle, comprising wheels and the braking system according to any one of claims 1 to 12, wherein the braking system is in transmission connection to the wheels.
